# EUROPÄISCHE PATENTANMELDUNG

(11) **EP 1 170 087 A2**
(43) Veröffentlichungstag der Anmeldung: **09.01.2002**
(21) Anmeldenummer: 01115973.8
(22) Anmeldetag: 30.06.2001
(51) Int. Cl.: B23Q 7/03, B23Q 7/14

(54) **Werkstück-Transportvorrichtung für im Durchlauf zu bearbeitende Werkstücke**

(30) Priorität: 05.07.2000 DE 10032672
(71) Anmelder: Torwegge Hüllhorst GmbH Massivholztechnik, 32584 Löhne (DE)
(72) Erfinder: Hirnschal, Heinrich, 32549 Bad Oeynhausen (DE); Milsmann, Klaus, 33659 Bielefeld (DE)
(74) Vertreter: Patentanwälte Dipl.-Ing. Bodo Thielking Dipl.-Ing. Otto Elbertzhagen

(57) **Zusammenfassung**

Eine solche Werkstück-Transportvorrichtung für eine die Werkstücke im Durchlauf bearbeitende Maschine besteht aus zumindest einer endlos umlaufenden Transportkette (1), die zum einen über ein Antriebsrad (5) und zum anderen über ein mitlaufendes Kettenrad umgelenkt ist und auf deren im Obertrum laufenden Kettenglieder (2) die Werkstücke transportierbar sowie spannbar sind, wobei die Kettenglieder (2) beidseits Laufrollen haben, die entlang dem Obertrum auf Führungsschienen abwälzen (4), von denen aus die Laufrollen (3) auf Mitnehmerelemente auflaufen, die mit einer der Teilung der Laufrollen (3) der Kettenglieder entsprechenden Teilung entlang dem Umfang des Antriebsrades (5) angeordnet sind. Damit beim Auflaufen der Laufrollen (5) der Kettenglieder (2) auf die Mitnehmerelemente des Antriebsrades (5) eine abrupte Abbremsung vermieden wird und entsprechend ein Auslaufen der drehenden Laufrollen (3) möglich ist, bestehen die Mitnehmerelemente des Antriebsrades (5) jeweils aus einem Rollenpaar (6), dessen beide Mitnehmerrollen (7, 8) achsparallel zum Antriebsrad (5) gelagert sind und einen Abstand voneinander haben, der kleiner als der Durchmesser der Laufrollen (3) an den Kettengliedern (2) ist.

## Beschreibung

Die Erfindung bezieht sich auf eine Werkstück-Transportvorrichtung der im Gattungsbegriff des Patentanspruchs 1 näher bezeichneten Art.

Solche Werkstück-Transportvorrichtungen kommen vor allem bei Holzbearbeitungsmaschinen zum Einsatz, die eine Vielzahl von in Durchlaufrichtung hintereinander angeordneten Bearbeitungsstationen haben, an denen vorwiegend spangebende Bearbeitungsaggregate angeordnet sind, welche den Durchlauf der Werkstücke als Werkstückvorschub nutzen. Vor allem geht es um die randseitige Bearbeitung von plattenförmigen Werkstücken, die hierfür verwendeten Maschinen sind sogenannte Doppelendprofiler, die zwei einander parallel gegenüberliegende, synchron angetriebene Ketten aufweisen, auf denen die Werkstücke gespannt und transportiert werden.

Auf Durchlaufmaschinen der genannten Art müssen die Transportketten heute schon Durchlaufgeschwindigkeiten von etwa 150 m/min bewältigen, und es ist absehbar, mit noch weit höheren Durchlaufgeschwindigkeiten von 180 m/min und mehr fertigwerden zu müssen. Für die auf den Führungsschienen zur Stützung des Obertrums der Transportkette abwälzenden Laufrollen der Kettenglieder führt dies bei den üblichen Durchmessern zu Drehzahlen in der Größenordnung von 1.200 min⁻¹.

Hierdurch ergibt sich ein besonderes Verschleißproblem bei denjenigen bekannten Werkstück-Transportvorrichtungen, bei denen die Laufrollen an den Kettengliedern in Mitnehmertaschen am Antriebsrad eintauchen, wobei mittels Formschluß die Antriebskräfte von den Taschenwandungen auf die Laufrollen der Kettenglieder übertragen werden. Zwangsläufig werden die noch schnelldrehenden Laufrollen der Kettenglieder bei der Aufnahme in den Mitnehmertaschen des Antriebsrades infolge Reibung abgebremst, was schlagartig erfolgt. Aufgrund von Wärme und Abrieb ergibt sich ein erheblicher Verschleiß, der schon nach relativ kurzen Betriebszeiten zu mechanischen Ungenauigkeiten in der Werkstück-Transportvorrichtung führt und auf Dauer zu Störungen führt.

Der Erfindung liegt deshalb die Aufgabe zugrunde, eine Werkstück-Transportvorrichtung der gattungsgemäßen Art zu schaffen, bei der beim Auflaufen der Laufrollen der Kettenglieder auf die Mitnehmerelemente des Antriebsrades eine abrupte Abbremsung vermieden wird und entsprechend ein Auslaufen der drehenden Laufrollen möglich ist.

Diese Aufgabe wird bei einer Werkstück-Transportvorrichtung der gattungsbildenden Art nach der Erfindung durch die kennzeichnenden Merkmale des Patentanspruchs 1 gelöst.

Für die Erfindung ist wesentlich, daß beim Auflaufen der Laufrollen der Kettenglieder auf die Rollenpaare am Kettenrad die jeweils beaufschlagten Mitnehmerrollen infolge Reibschluß mitdrehen und trotz der Mitnahmekraft, die jeweils von der in Antriebsdrehrichtung hintenliegenden Mitnehmerrolle des Rollenpaares auf die betreffende Laufrolle des Kettengliedes übertragen wird, nur eine allmähliche Drehzahlverringerung der Laufrolle am Kettenglied eintritt. Hierdurch ist es möglich, die Werkstücktransportkette mit hohen Geschwindigkeiten laufen zu lassen.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: die Ansicht einer Werkstück-Transportkette im Teilbereich des Antriebsrades und
- Fig. 2: eine vergrößerte Ansicht eines Umfangsabschnittes des Antriebsrades der Transportkette nach Fig. 1.

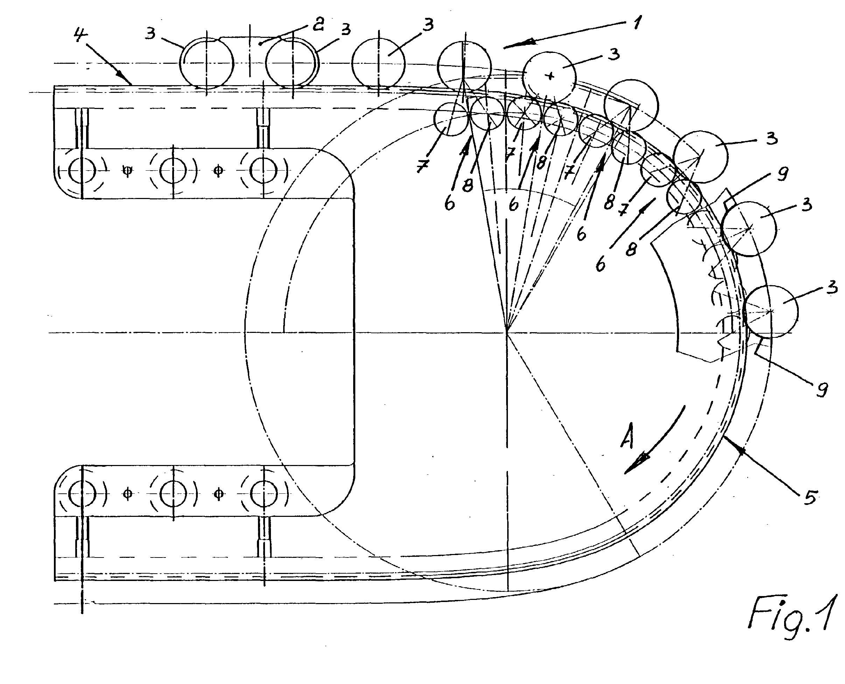

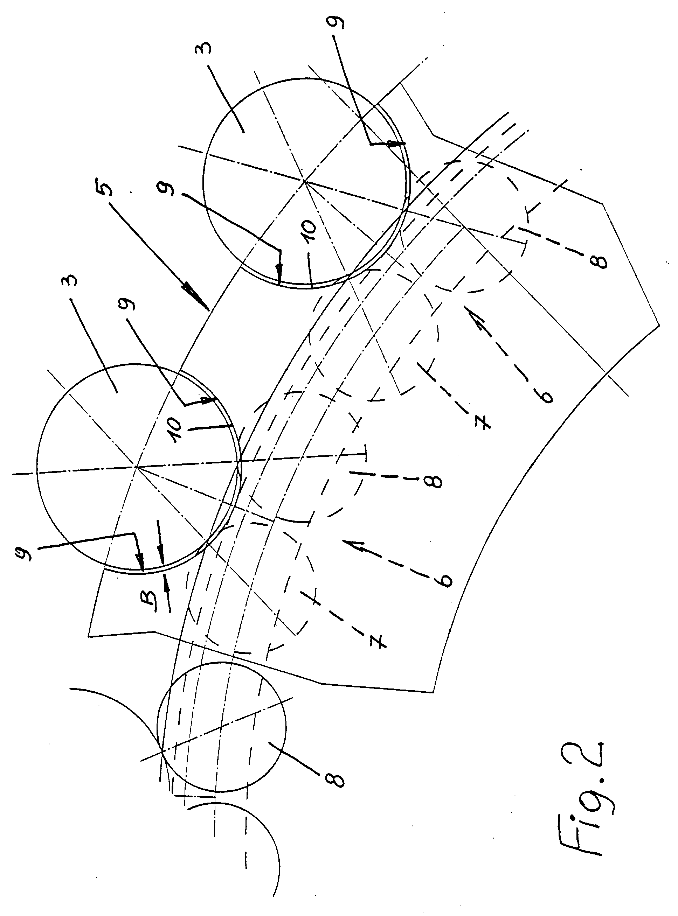

In den Figuren 1 und 2 ist die Transportkette 1 nur schematisch wiedergegeben, indem hier von nur einigen der Kettenglieder 2 lediglich die Laufrollen 3 dargestellt sind. Die Laufrollen 3 finden sich beidseits der Kettenglieder 2 und wälzen entsprechend auf miteinander parallelen Führungen 4 ab, die das Obertrum der Kette unterstützen. Eine dieser Führungsschienen 4 ist profiliert und die Laufrollen an der entsprechenden Seite der Kettenglieder 2 weisen ein entsprechendes Laufflächenprofil auf, um die Seitenführung der Kettenglieder 2 sicherzustellen.

Die Kette 1 ist endlos und wird an ihrem einen Ende über ein nicht angetriebenes, mitlaufendes Kettenrad umgelenkt, welches in der Zeichnung nicht dargestellt ist. Am anderen Ende läuft die Transportkette 1 über ein Antriebsrad 5, welches in der Antriebsdrehrichtung gemäß dem Pfeil A angetrieben wird und entsprechend eine Zugkraft auf das Obertrum der Kette ausübt. Die Zugkraftübertragung erfolgt über die Laufrollen 3 der Kettenglieder 2, die mit dem Antriebsrad 5 entlang dessen Umfang formschlüssig in Eingriff kommen.

Dazu sind entlang des Umfanges des Antriebsrades 5 jeweils aus zwei Mitnehmerrollen 7 und 8 bestehende Rollenpaare 6 angeordnet, die am Antriebsrad 5 drehbar gelagert sind, wobei die Achsen dieser Rollen 7 und 8 parallel mit der Rotationsachse des Antriebsrades 5 sind. Jede Laufrolle 3 der Kettenglieder 2 wird an der radial nach außen hin liegenden Seite der Rollenpaare 6 aufgenommen und taucht dabei in denjenigen Zwickel ein, der sich zwischen den beiden betreffenden Mitnehmerrollen 7 und 8 ergibt. Da die Laufrollen 3 an den Kettengliedern 2 und die Mitnehmerrollen 7 und 8 am Antriebsrad 5 miteinander achsparallel ausgerichtet sind, liegen die Laufrollen 3 jeweils entlang zweier Mantellinien, die in Umfangsrichtung der Laufrolle 3 einen Abstand voneinander haben, entlang je einer Mantellinie an der einen Mitnehmerrolle 7 und an der anderen Mitnehmerrolle 8 des jeweiligen Rollenpaares 6 an. Hierbei taucht die jeweilige Laufrolle 3 so tief in den Zwickel zwischen den beiden Mitnehmerrollen 7 und 8 ein, wie es dem Abstand der Sehne zwischen den beiden Berührungsmantellinien und dem Scheitel des darüber in Radialrichtung nach außen liegenden Umfangsbogens der Laufrolle 3 entspricht. Um die Mitnehmerrollen 7 und 8 entlang dem Umfang des Antriebsrades 5 mit gleicher Teilung anordnen zu können, wählt man im Bogenmaß gesehen den Abstand der Achsen aller Mitnehmerrollen 7 und 8 halb so groß wie die Teilung der Laufrollen 3 an den Kettengliedern 2. Dies geht nur, wenn die Mitnehmerrollen 7, 8 am Antriebsrad 5 im Durchmesser kleiner als die Laufrollen 3 der Kettenglieder 2 sind. Berücksichtigt man ferner noch, daß einerseits die Mitnehmerrollen 7 und 8 am Antriebsrad 5 möglichst dicht nebeneinander gelagert werden sollen, aber dennoch voneinander mit Abstand berührungsfrei angeordnet werden müssen, dann ist es besonders zweckmäßig, wenn der Durchmesser der Mitnehmerrollen 7, 8 am Antriebsrad 5 das 0,64fache des Durchmessers der Laufrollen 3 an den Kettengliedern 2 beträgt.

Da die Laufrollen 3 jeweils an beiden Seiten der Kettenglieder 2 angeordnet sind, sind entsprechend zwei Kränze von Mitnehmerrollen 7, 8 am Antriebsrad 5 vorhanden, deren Ebenen jeweils mit den Laufrollenebenen beidseits der Kettenglieder 2 fluchten. Zwischen diesen Kränzen können die Führungsschienen 4 an der Auflaufseite der Kettenglieder 2 zum Antriebsrad 5 eintauchen, um unter einem flachen Winkel die Umlaufbahn der Mitnehmerrollen 7, 8 zu schneiden, damit die auflaufenden Laufrollen 3 der Kettenglieder 2 allmählich an das betreffende Rollenpaar 6 herangeführt werden. Dadurch wird ein schlagartiges Aufsetzen der jeweiligen Laufrollen 3 auf das Rollenpaar 6 vermieden. Voraussetzung dafür ist jedoch, daß im Übergabebereich die Führungsschienen 4 die Laufrollen 3 nur in einem Teilbereich ihrer Breite unterstützen, während die Mitnehmerrollen 7, 8 des Antriebsrades 5 in dem von den Führungsschienen 4 nicht beanspruchten Breitenbereich in Eingriff mit den Laufrollen 3 kommen. Nur dann können die beiden Kränze der Mitnehmerrollen 7, 8 am Antriebsrad 5 kollisionsfrei an den Führungsschienen 4 vorbeilaufen.

Trotz der Mitnehmerrollen 7, 8 hat das Antriebsrad 5 zusätzlich noch Mitnehmertaschen 9, welche nicht ganz den halben Umfang der Laufrollen 3 an der Eingriffsseite der Rollenpaare 6 umfassen. Im Normalbetrieb liegen jedoch die Wandungen 10 dieser Taschen 9 äquidistant zu dem Außenumfang der Laufrollen 3, dies ist durch den Abstand B zwischen der Umfangsseite der Laufrollen 3 und der Taschenwandung 10 in Fig. 2 deutlich gemacht. Kommt es zu einer plötzlichen Hemmung der Transportkette 1, die durch einen Crashfall innerhalb der Maschine bedingt sein kann, wenn beispielsweise der Weiterlauf eines Werkstücks durch ein Werkzeug oder einen sonstigen Gegenstand blockiert ist, dann verhindern die Mitnehmertaschen 9 am Kettenrad 5 ein Überspringen der Laufrollen 3 der Kettenglieder 2 von einem Rollenpaar 6 zum nächsten. Aufgrund der Elastizität im Kettentransportsystem können dann zwar die Laufrollen 3 der Kettenglieder 2 sich von der in Antriebsdrehrichtung A vornliegenden Mitnehmerrolle 8 abheben, können jedoch nicht die in Antriebsdrehrichtung A hintenliegende Mitnehmerrolle 7 überspringen, weil sie zuvor zur Anlage an der Wandung 10 der umgebenden Tasche 9 des Kettenrades 5 kommen. In der Praxis reicht ein Abstand B von 1 mm aus, um in einem Crashfall zu verhindern, daß die Laufrollen 3 sich über den radial nach außen hin liegenden Scheitel der jeweils in Antriebsdrehrichtung A hintenliegenden Mitnehmerrolle 7 hinwegspringen können.

Die Mitnehmerrollen 7, 8 der Rollenpaare 6 am Antriebsrad 5 werden beim Auflaufen der Laufrollen 3 der Kettenglieder 2 infolge deren Drehung reibschlüssig drehend angetrieben, wodurch sich die Rotationsenergie der Laufrollen 3 allmählich abbauen kann. In umgekehrter Weise können die Laufrollen 3 vor dem Auflaufen auf die Führungsschienen 4 auf eine Drehzahl beschleunigt werden, um eine übermäßige Reibung an der Auflaufstelle auf die Führungsschienen 4 zu vermeiden. Dazu kann im Bereich des Untertrums der Transportkette 1 eine Gegenfläche vorgesehen werden, gegen die bei entsprechender Führung der Kettenglieder 2 die Laufrollen 3 allmählich angedrückt werden, bevor sie das nicht angetriebene Kettenrad erreichen.

## Patentansprüche

1. Werkstück-Transportvorrichtung für eine die Werkstücke im Durchlauf bearbeitende Maschine bestehend aus zumindest einer endlos umlaufenden Transportkette (1), die zum einen über ein Antriebsrad (5) und zum anderen über ein mitlaufendes Kettenrad umgelenkt ist und auf deren im Obertrum laufenden Kettenglieder (2) die Werkstücke transportierbar sowie spannbar sind, wobei die Kettenglieder (2) beidseits Laufrollen (3) haben, die entlang dem Obertrum auf Führungsschienen (4) abwälzen, von denen aus die Laufrollen (3) auf Mitnehmerelemente auflaufen, die mit einer der Teilung der Laufrollen (3) der Kettenglieder (2) entsprechenden Teilung entlang dem Umfang des Antriebsrades (5) angeordnet sind,
**dadurch gekennzeichnet,**
**daß** die Mitnehmerelemente des Antriebsrades (5) jeweils aus einem Rollenpaar (6) bestehen, dessen beide Mitnehmerrollen (7, 8) achsparallel zum Antriebsrad (5) gelagert sind und einen Abstand voneinander haben, der kleiner als der Durchmesser der Laufrollen (3) an den Kettengliedern (2) ist.

2. Werkstück-Transportvorrichtung nach Anspruch 1,
**dadurch gekennzeichnet,**
**daß** der Durchmesser der Mitnehmerrollen (7, 8) am Antriebsrad (5) kleiner als der Durchmesser der Laufrollen (3) an den Kettengliedern (2) ist.

3. Werkstück-Transportvorrichtung nach Anspruch 2,
**dadurch gekennzeichnet,**
**daß** der Achsabstand aller Mitnehmerrollen (7, 8) am Antriebsrad (5) gleich ist und demgemäß im Bogenmaß in Umfangsrichtung des Antriebsrades (5) der halben Teilung der Laufrollen (3) der Kettenglieder (2) entspricht.

4. Werkstück-Transportvorrichtung nach Anspruch 3,
**dadurch gekennzeichnet,**
**daß** der Durchmesser der Mitnehmerrollen (7, 8) am Antriebsrad (5) das 0,6 bis 0,7fache des Durchmessers der Laufrollen (3) an den Kettengliedern (2) entspricht.

5. Werkstück-Transportvorrichtung nach einem der Ansprüche 1 - 4,
**dadurch gekennzeichnet,**
**daß** das Antriebsrad (5) die radial nach innen hin auf den beiden Mitnehmerrollen (7, 8) der Rollenpaare (6) abgestützten Laufrollen (3) der Kettenglieder (2) an zumindest der entgegen der Antriebsdrehrichtung (A) liegenden Seite umgreifende Taschen (9) hat, deren Wandung (10) jeweils einen solchen Abstand (B) von der betreffenden Laufrolle (3) hat, daß im Überlastfall vor dem Überspringen der in Antriebsdrehrichtung (A) hinteren Mitnehmerrolle (7) die Laufrolle (3) an die Taschenwandung (10) anschlägt.

6. Werkstück-Transportvorrichtung nach einem der Ansprüche 1 - 5,
**dadurch gekennzeichnet,**
**daß** die Führungsschienen (4) bogenförmig in die Umlaufbahn der Mitnehmerrollen (7, 8) am Antriebsrad (5) unter einem geringen Winkel eintauchen, wobei die Führungsschienen (4) im Eintauchbereich und die Mitnehmerrollen (7, 8) die Laufrollen (3) der Kettenglieder (2) je halbseitig unterstützen.
